(19) Europäisches Patentamt
European Patent Office
Office européen des brevets

(11) Publication number: **0 270 365**
**A1**

## (12) EUROPEAN PATENT APPLICATION

(21) Application number: **87310646.2**

(22) Date of filing: **03.12.87**

(51) Int. Cl.⁴: **G 11 B 7/09**
**G 11 B 7/095**

(30) Priority: **05.12.86 JP 288708/86**

(43) Date of publication of application:
**08.06.88 Bulletin 88/23**

(84) Designated Contracting States: **AT DE FR GB NL**

(71) Applicant: **SONY CORPORATION**
**7-35 Kitashinagawa 6-Chome Shinagawa-ku**
**Tokyo 141 (JP)**

(72) Inventor: **Wachi, Shigeharu c/o Patent Division**
**Sony Corporation 6-7-35 Kitashinagawa**
**Shinagawa-ku Tokyo 141 (JP)**

**Kuwabara, Shinichiro c/o Patent Division**
**Sony Corporation 6-7-35 Kitashinagawa**
**Shinagawa-ku Tokyo 141 (JP)**

(74) Representative: **Pilch, Adam John Michael et al**
**c/o D. Young & Co. 10 Staple Inn**
**London WC1V 7RD (GB)**

(54) Servo circuits for optical disc information recording and/or reproducing apparatus.

(57) An optical disc information recording and/or reproducing apparatus, for writing and reading information to and from an optical disc (1) used as a record medium on which pre-grooves are formed and address signals are pre-recorded on land sections between the pre-grooves as a series of pits, includes a servo circuit (130) for executing tracking and/or focusing control. In the servo circuit (130), switch means (35) is provided for opening and closing control loops (37A, 37B) for the tracking and focusing control, and the switch means (35) is controlled to open during reproduction of the address signals recorded on an address area of the optical disc (1). As a result, servo signals including noise arising from detection of the pits in the address area are cut off, thereby stabilising tracking and/or focusing control. This enables information writing and reading to and from the record area of the optical disc (1) to be achieved with high reliability and stability.

FIG.5

EP 0 270 365 A1

**Description**

# SERVO CIRCUITS FOR OPTICAL DISC INFORMATION RECORDING AND/OR REPRODUCING APPARATUS

This invention rlates to servo circuits for optical disc information recording and/or reproducing apparatus, namely circuits which may execute tracking and/or focusing control for writing and/or reading information to or from an optical disc used as a record medium.

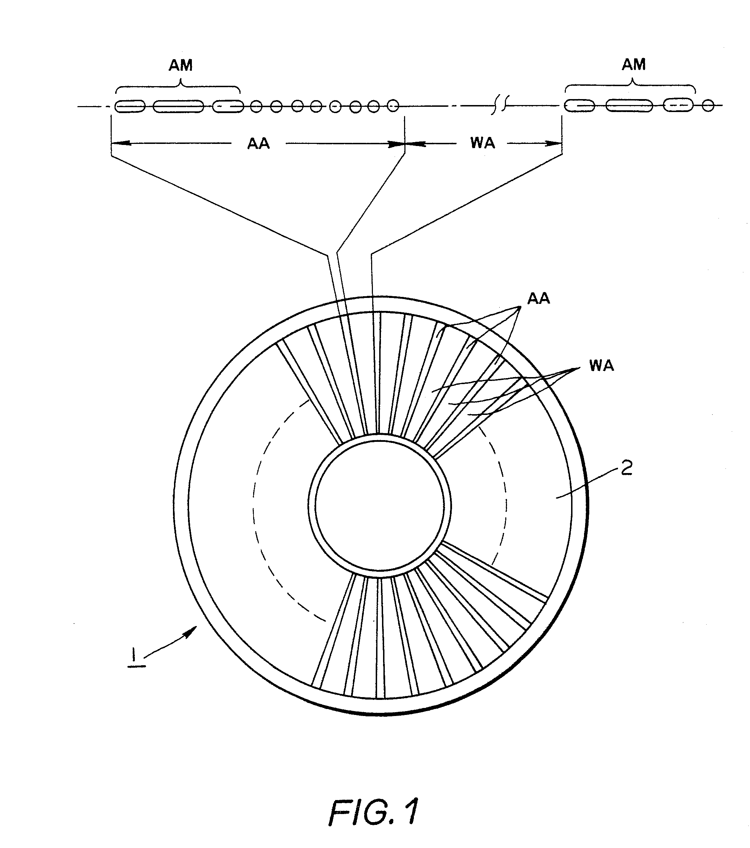

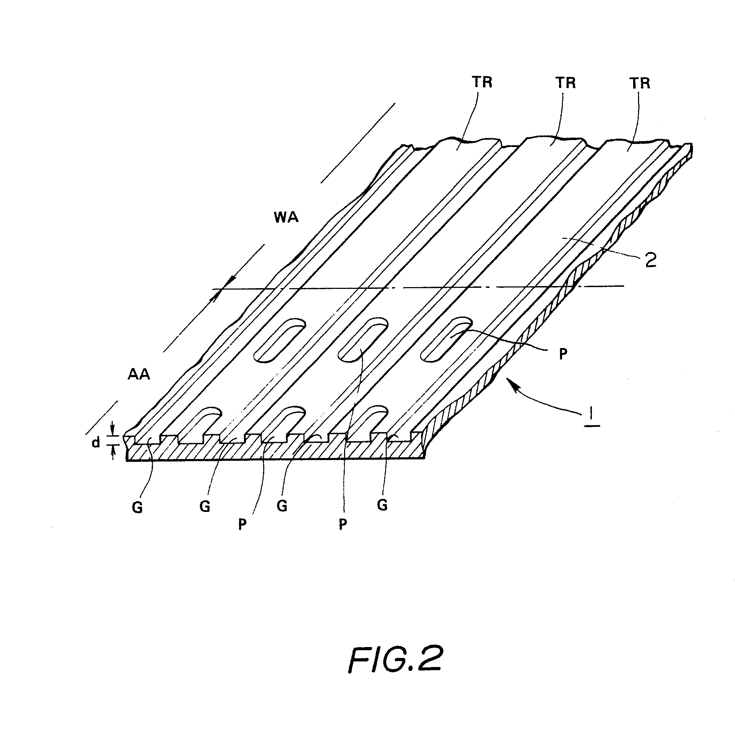

In previously-proposed optical disc information recording and reproducing apparatus, as shown in Figures 1 and 2 of the accompanying drawings, an optical disc 1 on which a record surface 2 is formed with vertical magnetising remanence, having for example an opto-magnetic effect or Kerr effect, is used as a record medium. In the optical disc 1, there are provided plural land sections each of which are formed between concentric pre-grooves G at equal intervals to serve as record tracks TR. One track is, for example, divided into 36 (0 to 35) sectors, and each sector is further divided into a record area WA for writing information thereon and an address area AA for writing address signals thereon to designate the record area WA.

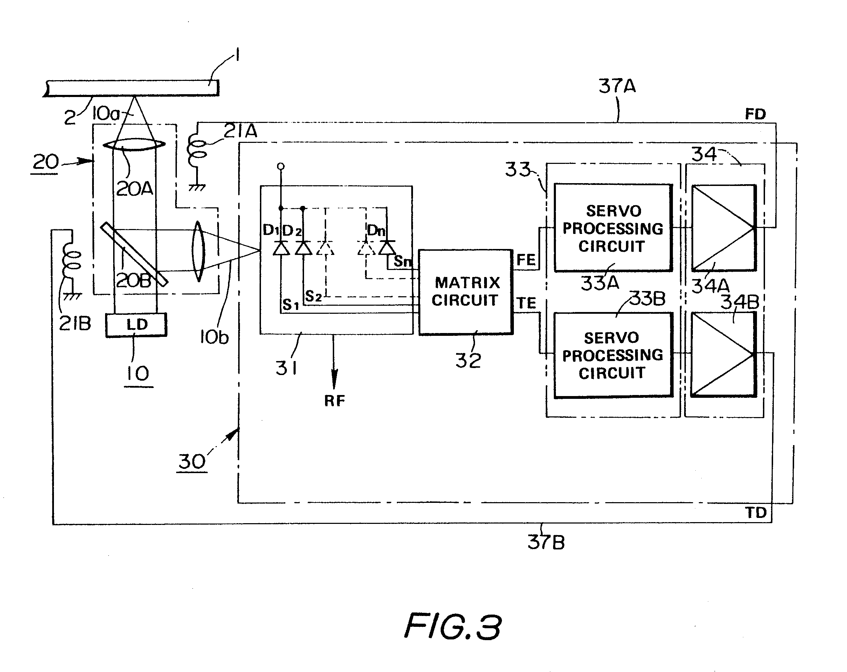

A laser beam 10a (shown in Figure 3 of the accompanying drawings) which is modulated by recorded information is irradiated on to the record area WA. By imparting a magnetic field, using a subsidiary magnetic field generating means such as a magnet, so as to reverse the direction of magnetisation of the recording surface 2 formed with the vertical magnetising remanence having the optomagnetic effect at the same time as irradiation by the laser beam, signals are recorded on the record area WA. Also, in the address area AA, a pit row with pits P in the form of recesses and projections designating the track address of the corresponding record area WA is previously provided. These pits P have a depth $d$ of about $\lambda/8$ to $\lambda/4$, where $\lambda$ is the wavelength of the laser beam used for writing and reading information.

Further, in a leading part of the address area AA, an address mark AM consisting of a pit pattern in the form of projections and recesses having a predetermined length is formed so as to indicate that this area is the address area.

In order to execute writing and reading information reliably to and from the record area WA, in the previously-proposed optical disc information recording and reproducing apparatus using the aforementioned optical disc 1 as a record medium, a servo circuit 30 is provided, as shown in Figure 3 of the accompanying drawings. In the servo circuit 30, focusing control or tracking control of the laser beam may, for example, be executed in such a manner that the laser beam 10a radiated from a laser diode 10 irradiates the record surface 2 of the optical disc 1 through an optical head or system 20, and reflected light 10b from the optical disc 1 is detected from the optical system 20.

The servo circuit 30 comprises a photodetector 31 with plural light receiving elements, a matrix circuit 32, a servo signal processing circuit 33 and a driving circuit 34. A servo loop 37A for focusing control and a servo loop 37B for tracking control are also provided. In the respective servo loops 37A, 37B, focusing drive signals FD and tracking drive signals TD, that are derived from detection signals $S_1$, $S_2$ ... Sn from the photodetector 31 such that focusing and tracking errors of the optical system 20 become zero, are supplied to a focusing coil 21A and a tracking coil 21B, respectively.

The photodetector 31 comprises, for example, plural detecting elements $D_1$, $D_2$ ... Dn, with RF signals and various servo signals being derived from the detection signals $S_1$, $S_2$ ... Sn from the detecting elements.

The matrix circuit 32 performs predetermined arithmetic operating and processing steps on the detection signals $S_1$, $S_2$ ... Sn from the photodetector 31, and outputs focusing error signals FE and tracking error signals TE based thereon.

One configuration of the matrix circuit for obtaining the focusing error signals FE is, for example, disclosed in US Patent No. US-A-4 023 033, and one configuration for obtaining the tracking error signals TE is disclosed in European Patent Application Serial No. EP-A-0 201 603; detailed explanations of these circuits will not be given since they differ from the essential parts of embodiments of the present invention.

The servo signal processing circuit 33 is formed by a focusing processing circuit 33A and a tracking processing circuit 33B. The focusing processing circuit 33A executes phase compensation on the focusing error signals FE so as to stabilise the operation of the servo loop 37A for focusing control. Similarly, the tracking processing circuit 33B executes phase compensation on the tracking error signals TE so as to stabilise the operation of the servo loop 37B for tracking control.

The driving circuit 34 is formed by a focusing drive amplifier 34A and a tracking drive amplifier 34B. By amplifying the focusing error signals FE supplied from the focusing processing circuit 33A with phase compensation already having been executed with an optimum loop signal gain, the focusing drive amplifier 34A forms the focusing drive signals FD which reduce focusing errors of the optical system to zero, and supplies the signals FD to the focusing coil 21A. Also, by amplifying the tracking error signals TE supplied from the tracking processing circuit 33B with phase compensation already having been executed with an optimum loop gain, the tracking drive amplifier 34B forms the tracking drive signals TD which reduce tracking errors of the optical system to zero, and supplies the signals to the tracking coil 21B.

In the servo circuit 30, the focusing error signals FE and the tracking error signals TE are obtained by detecting the changes in the spot of the laser beam 10b reflected from the record surface 2 of the optical disc 1, by the photodetector 31. By supplying the focusing drive signals FD and the tracking drive signals TD that are respectively based on the focusing error signals FE and the tracking error signals TE to the focusing coil 21A and the tracking coil 21B through the respective servo loops 37A, 37B, the light spots of the laser beam 10a radiated on to the optical disc 1 are focused on the record surface 2. Focusing control and tracking control are performed such that the light spots of the laser beam 10a trace the centre of the tracks TR of the optical disc 1 (which is generally rotating at a constant velocity).

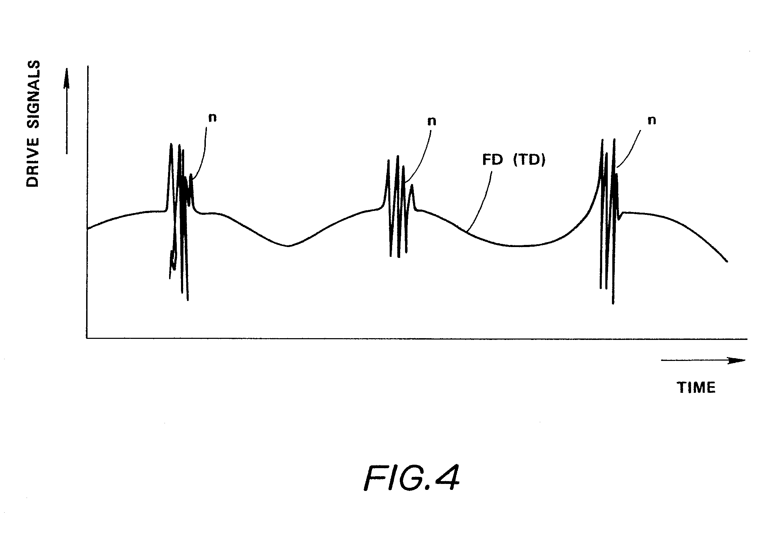

In the case that focusing control by the servo loop 37A or tracking control by the servo loop 37B is performed by the above-described previously-proposed servo circuit 30, when the light spots of the laser beam tracking the record tracks TR formed on the record surface 2 of the optical disc 1 pass the address areas AA having rows of the pits P in the form of projections and recesses, an irregular light diffraction to the return laser beam 10b reflected by the record surface 2 is caused due to these pits P of the address area AA. This results in abrupt fluctuations of the outputs of the photodetector 31, typically of about 20 dB. Because of this, when the light spots of the laser beam are in the address area AA, noise signals in the form of bursts are caused. As indicated in Figure 4 of the accompanying drawings, this large impact noise n is superimposed on the focusing drive signals FD or the tracking drive signals TD respectively supplied to the focusing coil 21A and the tracking coil 21B.

Accordingly, the focusing coil 21A and the tracking coil 21B are affected by such impact noise n to cause irregular and sudden fluctuations of optical elements such as an object lens 20A operated by the focusing coil 21A or a galvanomirror 20B operated by the tracking coil 21B (both of which are components of the optical system 20) momentarily to render the positional control of the optical system 20 temporarily difficult.

In order to eliminate the effect of the impact noise n, it may be contemplated to add a low-pass filter or use a secondary interpolating system for elimination or compensation thereof. However, the impact noise n extends over a wide frequency range so that the servo circuit may be undesirably complicated or enlarged in size.

According to the present invention there is provided a servo circuit for an optical disc information recording and/or reproducing apparatus which comprises photodetecting means for receiving reflected light from a laser beam irradiated by means of an optical system on an optical disc having a writable record area and an address area on which address signals for designating the record area are pre-recorded as physical changes in the optical disc, the servo circuit comprising: matrix circuit means for processing signals detected by the photodetecting means to provide focusing error signals and tracking error signals therefrom; signal processing circuit means for phase compensation of said focusing error signals and tracking error signals; and drive circuit means for amplifying output signals of said signal processing circuit means to an optimum level to supply the amplified signals as drive signals for focusing and tracking to a drive coil of the optical system; characterized by: switch means for opening and closing at least one supply line for said focusing error signals and tracking error signals supplied to said drive coil; and address detecting circuit means for detecting an interval when the laser beam is irradiating the address area of said optical disc on the basis of the signals detected by said photodetecting means, wherein said switch means is opened by detection signals from said address detecting circuit means so as to terminate supplying at least one of said focusing error signals or tracking error signals supplied to the drive coil for the interval when the laser beam is irradiating the address area of the optical disc.

A servo circuit for an optical disc information recording and reproducing apparatus according to a preferred embodiment of the invention, to be described in greater detail hereinafter, allows information to be written or reproduced to or from the record area thereof with improved accuracy and stability by eliminating effects from impact noise caused when the light spots of the laser beam irradiating the optical disc are in the address area.

In the preferred embodiment, the irradiating time of the laser beam in the address area of the optical disc is determined on the basis of the detected signals of light reflected from the disc, so as to terminate supplying a driving coil of the optical system providing the laser beam with at least either focusing error signals or tracking error signals, using a switch means.

Address marks recorded in a leading part of the address area of the optical disc are preferably detected to form timing signals for opening the switch means so as to terminate supplying the respective driving coil of the optical system with focusing error signals and/or tracking error signals.

The invention will now be described by way of example with reference to the accompanying drawings, throughout which like parts are referred to by like references, and in which:

Figure 1 is a diagrammatic view showing the structure of an optical disc having a record area and an address area;

Figure 2 is a view in perspective of the optical disc of Figure 1, with a boundary part of the record area and the address area enlarged for clarity;

Figure 3 is a block diagram showing a previously-proposed servo circuit for optical disc information recording and reproducing apparatus with the optical disc of Figures 1 and 2 used as a record medium;

Figure 4 shows a waveform of the driving signals supplied to a driving coil of the optical system in the circuit of Figure 3;

Figure 5 is a block diagram showing a servo circuit for optical disc information recording and reproducing apparatus according to an embodiment of the present invention;

Figure 6 is a block diagram showing a practical configuration of an address detecting circuit included in the embodiment of Figure 5;

Figure 7 is a timing chart showing the operation of the address detecting circuit of Figure 6;

Figure 8 shows waveforms of the detection signals of the address detecting circuit and of the driving signals supplied to the driving coil of the optical system of the embodiment of Figure 6.

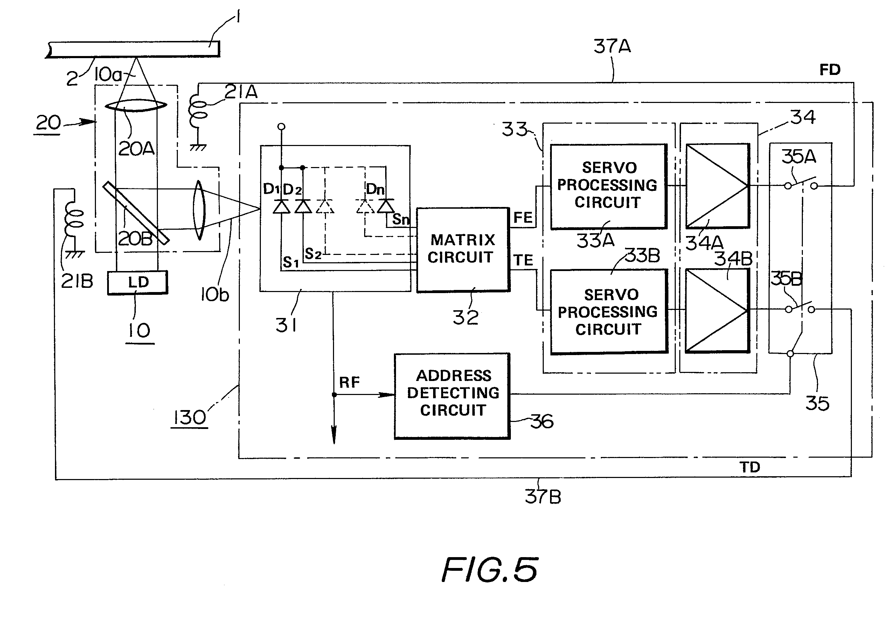

Figure 5 illustrates a configuration of a servo circuit for an optical disc information recording and/or reproducing apparatus embodying the present invention. In Figure 5, a servo circuit 130 is provided in which parts similar to those of the previously-described servo circuit 30 shown in Figure 3 are indicated by the same reference numerals and therefore detailed description thereof will be omitted for simplicity. The apparatus of Figure 5 also uses the optical disc 1 of Figures 1 and 2 as a record medium. Other parts of the recording and/or reproducing apparatus are similar to those of the previously-proposed optical disc information recording and/or reproducing apparatus shown in Figure 3.

The servo circuit 130 of the embodiment shown in Figure 5 additionally comprises a switch circuit 35 for opening and closing the respective servo loops 37a, 37B that supply respective driving signals FD, TD to the focusing coil 21A and the tracking coil 21B driving the optical elements such as the object lens 20A and the galvanomirror 20B of the optical head or system 20, and an address detecting circuit 36 for discriminating a record area WA and an address area AA of the optical disc 1 from the RF signals supplied from the photodetector 31 detecting the reflected light 10b from the record surface 2 of the optical disc 1. The address detecting circuit 36 supplies switch opening and closing control signals SS to the switch circuit 35.

The switch circuit 35 is provided on the output side of the drive circuit 34 to which focusing error signals FE and tracking error signals TE obtained by the prescribed arithmetic operating and processing steps on the detection signals $S_1$, $S_2$ ... Sn from the photodetector 31 in the matrix circuit 32 are supplied via the servo signal processing circuit 33. The switch circuit 35 comprises a twin switch 35A, 35B controlled by the opening and closing control signals SS supplied from the address detecting circuit 36, and is connected in series between the respective output terminals of the focusing drive amplifier 34A and the tracking drive amplifier 34B forming the drive circuit 34, and the focusing coil 21A and the tracking coil 21B.

The address detecting circuit 36 forms clock signals and sector address signals from the data in the address area AA of the optical disc 1 based on the RF signals. The address detecting circuit 36 also forms signals indicating an interval $T_{AA}$ during which the laser beam 10a generated by the laser diode 10 is tracing the address area AA based on a detection timing $t_0$ of address mark signals AM by detecting the address mark signals AM recorded in the leading part of the address area AA, and supplies these interval-indicating signals to a control input terminal of the switch circuit 35 as the opening and closing control signals SS. The address detecting circuit 36 controls the switch circuit 35 by closing the respective switches 35A, 35B during a period $T_{WA}$ when the laser beam 10a is tracing the record area WA of the optical disc 1, and opening them during the period $T_{AA}$ when the address area AA is being traced thereby.

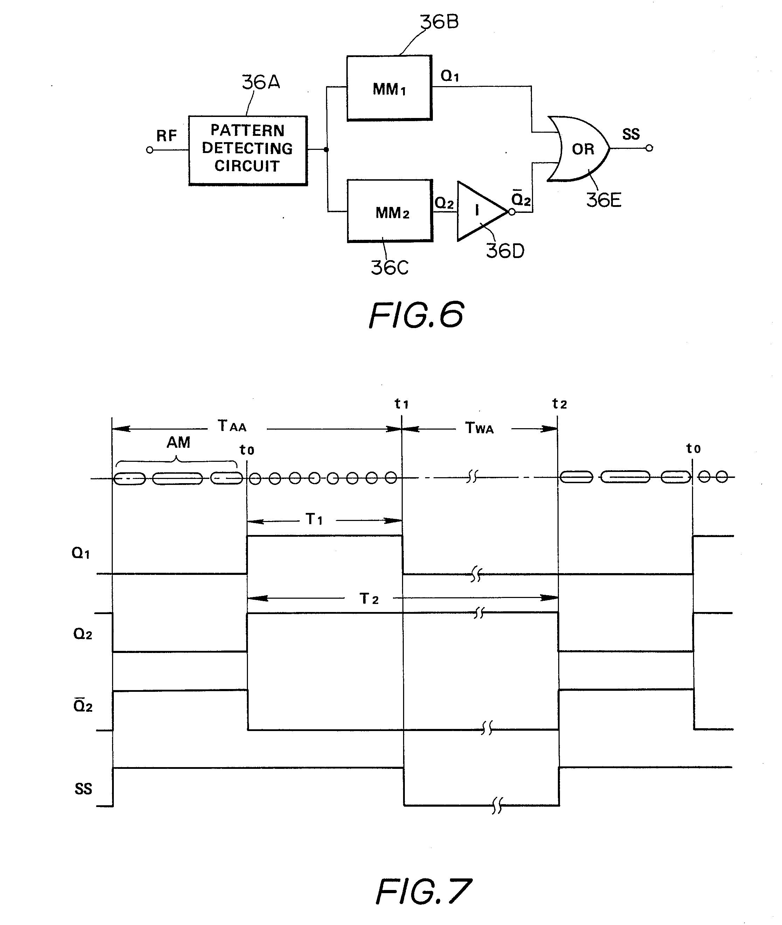

With reference to Figure 6, the address detecting circuit 36 may comprise, for example, a pattern detecting circuit 36A for detecting the address mark signals AM indicated by a pit pattern of projections and recesses having a predetermined length, two monostable mulivibrators 36B, 36C being triggered by the detection output of the pattern detecting circuit 36A, an inverter 36D for reversing the polarity of an output $Q_2$ of the monostable multivibrator 36C, and an OR gate circuit 36E to which an output $Q_1$ of the monostable multivibrator 36B and the output $\overline{Q}_2$ of the inverter 36C are supplied.

As shown in Figure 7, the monostable multivibrator 36B is triggered at the detection timing $t_0$ of the address mark signals AM due to the detection output of the pattern detection circuit 36A, and supplies the OR gate circuit 36E with the output $Q_1$ which is at logic 'H' only for an interval following the end of the address area AA, that is, an interval $T_1$ extending until the record area WA starts from the timing $t_1$. Also, the monostable multivibrator 36C is triggered at the detection timing $t_0$ of the address mark signals AM due to the detection output of the pattern detection circuit 36A, and supplies the OR gate circuit 36E through the inverter 36D with the inverted output $\overline{Q}_2$ which is at logic 'H' only for an interval following the end of the record area WA, that is, a period $T_2$, the address area AA starting from a timing $t_2$. As a result, the OR gate circuit 36E output opening and closing control signals SS for opening the switch circuit 35 are at logic 'H' for the period $T_{AA}$ corresponding to the address area AA of the optical disc 1, and for closing the switch circuit 35 are at logic 'L' for the period $T_{WA}$ corresponding to the record area WA.

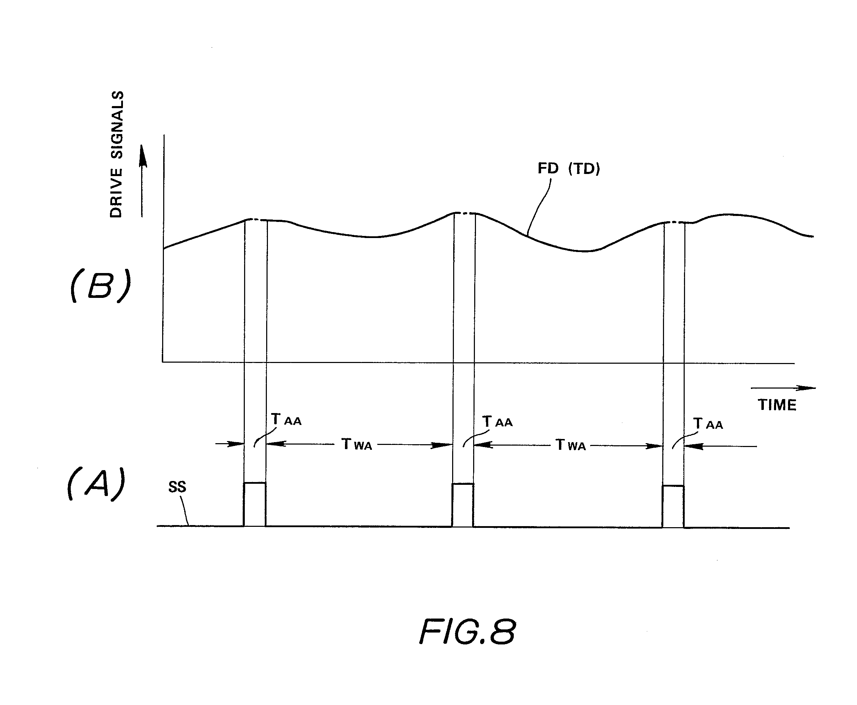

In the servo circuit 130 of the present embodiment, the opening and closing control signals SS formed by the address detecting circuit 36 as shown in waveform A of Figure 8 controls the operation of the switch circuit 35 in such a manner that, as shown in waveform B of Figure 8, the respective drive signals FD, TD formed by the drive circuit 34 are supplied to the focusing coil 21A and the tracking coil 21B during the interval $T_{WA}$ when the record area WA of the optical disc 1 is being traced, and the supply of the drive signals FD, TD is cut-off during the interval $T_{AA}$ when the address area AA is being traced.

In other words, during the interval $T_{WA}$ when the laser beam 10a generated from the laser diode 10 is tracing the record area WA of the optical disc 1, the switch circuit 35 provided on the output side of the drive circuit 34 is closed by the opening and closing control signals SS from the address detection circuit 36. As a result of this, the focusing drive signals FD and the tracking drive signals TD formed by the focusing drive amplifier 34A and the tracking drive amplifier 34B constituting the drive circuit 34 are supplied to the focusing coil 21A and the tracking coil 21B so as to execute focusing control and tracking control of the laser bem 10a directed on to the required record track TR on the optical disc 1.

Also, during the interval $T_{AA}$ when the laser beam 10a is tracing the address area AA of a track TR of the optical disc 1, since the switch circuit 35 is opened by the opening and closing control signals SS, the supply of the focusing drive signals FD and the tracking drive signals TD (including noise elements generated in the reflected light 10b of the laser beam 10a as a result of irradiation of the address area AA) to the focusing coil 21A and the tracking coil 21B is cut-off.

Since the supply of the focusing drive signals FD and the tracking drive signals TD is cut-off during the interval $T_{WA}$ as indicated by a dotted line in the waveform B of Figure 8, focusing control and tracking control of the laser beam 10a are not performed. However, the interval $T_{AA}$ corresponding to the address area AA is generally approximately 80 μS, being extremely short compared to the interval $T_{WA}$ corresponding to the record area WA, which is typically 720 μS. Consequently, if focusing and tracking control is released for the very short interval $T_{AA}$ of 80 μS, the respective optical elements of the optical system 20 driven by the focusing coil 21A and the tracking coil 21B are subject to inertial movement caused by the inertial force due to their own mass, so that the optimum focusing and tracking states are maintained without being affected by noise.

In the present embodiment, the switch circuit 35 may be provided between any components within the servo loops 37A, 37B for supplying the focusing coil 21A and the tracking coil 21B with the respective drive signals FD, TD; for example, the switch circuit may be disposed between the servo signal processing circuit 33 and the drive circuit 34.

Also in the present embodiment, the focusing servo loop 37A and the tracking servo loop 37B are opened and closed simultaneously. As an alternative, control may be made so as to open or close either one of these servo loops 37A, 37B.

## Claims

1. A servo circuit for an optical disc information recording and/or reproducing apparatus which comprises photodetecting means (31) for receiving reflected light (10b) from a laser beam (10a) irradiated by means of an optical sytem (20) on an optical disc (1) having a writable record area (WA) and an address area (AA) on which address signals for designating the record area (WA) are prerecorded as physical changes in the optical disc (1), the servo circuit (130) comprising:

matrix circuit means (32) for processing signals ($S_1$ to $S_n$) detected by the photodetecting means (31) to provide focusing error signals (FE) and tracking error signals (TE) therefrom;

signal processing circuit means (33) for phase compensation of said focusing error signals (FE) and tracking error signals (TE); and

drive circuit means (34) for amplifying output signals of said signal processing circuit means (33) to an optimum level to supply the amplified signals as drive signals (FD, TD) for focusing and tracking to a drive coil (21A, 21B) of the optical system (20);

characterized by:

switch means (35) for opening and closing at least one supply line (37A, 37B) for said focusing error signals (FE) and tracking error signals (TE) supplied to said drive coil (21A, 21B); and

address detecting circuit means (36) for detecting an interval ($T_{AA}$) when the laser beam (10a) is irradiating the address area (AA) of said optical disc (1) on the basis of the signals ($S_1$ to $S_n$) detected by said photodetecting means (31), wherein said switch means (35) is opened by detection signals (SS) from said address detecting circuit means (36) so as to terminate supplying at least one of said focusing error signals (FE) or tracking error signals (TE) supplied to the drive coil (21A, 21B) for the interval ($T_{AA}$) when the laser beam (10a) is irradiating the address area (AA) of the optical disc (1).

2. A servo circuit according to claim 1, wherein said switch means (35) is provided on the output side of said drive circuit means (34).

3. A servo circuit according to claim 1 or claim 2, wherein said address detecting circuit means (36) is operable to detect address marks (AM) recorded in a leading part of said address area (AA).

4. A servo circuit according to claim 3, wherein said address detecting circuit means (36) is operable to output timing signals (SS) for opening said switch means (35) on the basis of signals fluctuating at a first prescribed timing width ($T_1$) and a second prescribed timing width ($T_2$) from the detected timing of the address marks (AM) recorded on the address area (AA)

**FIG.1**

*FIG.2*

FIG.3

FIG.4

**FIG.5**

0270365

FIG.6

FIG.7

FIG.8

| | **DOCUMENTS CONSIDERED TO BE RELEVANT** | | | EP 87310646.2 |
|---|---|---|---|---|
| Category | Citation of document with indication, where appropriate, of relevant passages | | Relevant to claim | CLASSIFICATION OF THE APPLICATION (Int. Cl.4) |
| Y | PATENT ABSTRACTS OF JAPAN, unexamined applications, field P, vol. 9, no. 227, September 13, 1985 THE PATENT OFFICE JAPANESE GOVERNMENT page 155 P 388 <br> * Kokai-no. 60-85 444 (SANYO DENKI K.K.) * | | 1-4 | G 11 B 7/09 <br> G 11 B 7/095 |
| P,Y | EP - A2 - 0 227 445 (SONY CORPORATION) <br> * Fig. 15; abstract; page 19, lines 24-25 * | | 1-4 | |
| P,A | EP - A2 - 0 225 258 (FUJITSU LIMITED) <br> * Fig. 1-6; abstract * | | 1-4 | |
| D,A | EP - A1 - 0 201 603 (SONY CORPORATION) <br> * Fig. 1-8; abstract * | | 1-4 | **TECHNICAL FIELDS SEARCHED (Int. Cl.4)** <br> G 11 B 7/00 <br> G 11 B 21/00 <br> G 01 J 1/00 |

The present search report has been drawn up for all claims

| Place of search | Date of completion of the search | Examiner |
|---|---|---|
| VIENNA | 07-03-1988 | BERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82